# EUROPÄISCHE PATENTSCHRIFT

(11) **EP 3 107 798 B1**
(45) Veröffentlichungstag und Bekanntmachung des Hinweises auf die Patenterteilung: **08.08.2018**
(21) Anmeldenummer: 15705907.2
(22) Anmeldetag: 10.02.2015
(51) Int. Cl.: B62D 35/00, B62D 37/02

(54) **HECKSPOILEREINRICHTUNG FÜR EIN FAHRZEUG**
REAR SPOILER DEVICE FOR A VEHICLE
SYSTÈME DE DÉFLECTEUR D'AIR ARRIÈRE POUR VÉHICULE

(30) Priorität: 21.02.2014 DE 102014002200; 20.09.2014 DE 102014014215
(43) Veröffentlichungstag der Anmeldung: 28.12.2016
(73) Patentinhaber: WABCO Europe BVBA, 1160 Brussels (BE)
(72) Erfinder: DIECKMANN, Thomas, 30982 Pattensen (DE); INKERMANN, David, 38106 Braunschweig (DE); NEUMANN, Chistopher, 31061 Alfeld (DE); VAN RAEMDONCK, Gandert Marcel Rita, NL-2611 PW Delft (NL)
(74) Vertreter: Lauerwald, Jörg
(86) Internationale Anmeldenummer: PCT/EP2015/000275
(87) Internationale Veröffentlichungsnummer: WO 2015/124271

(56) Entgegenhaltungen:
- EP-A1- 2 500 244
- WO-A1-2012/051174
- WO-A1-2013/063479
- WO-A2-2009/102695
- DE-A1-102008 053 770
- DE-A1-102012 101 897
- US-A- 4 919 472
- US-A- 5 536 062
- US-A1- 2003 227 194
- US-A1- 2010 201 153
- US-A1- 2010 225 143

## Beschreibung

Die Erfindung betrifft eine Heckspoilereinrichtung für ein Fahrzeug, insbesondere ein Nutzfahrzeug, z. B. einen LKW, wobei das Fahrzeug mindestens eine Hecktüre, insbesondere zwei Hecktüren aufweist. Die Heckspoilereinrichtung ist insbesondere für ein Fahrzeug mit einem im Wesentlichen kastenförmigen Aufbau, d.h. mit Seitenwänden, Dach und diese nach hinten rechtwinklig abschließendem Heck mit Hecktüren geeignet.

Die US 2004/0119319 A1 zeigt ein Fahrzeug mit einer derartigen Heckspoilereinrichtung. Die Dach-Luftleitelemente verlängern die Dachfläche des Fahrzeugs nach hinten und können nach innen eingefaltet werden. Weiterhin sind Seiten-Luftleitelemente vorgesehen, um die gesamte Fläche des LKW nach hinten aerodynamisch zu verlängern. Die Verstelleinrichtung wird an den Hecktüren angebracht, so dass sie im eingefahrenen Zustand mit den Hecktüren wegschwenken kann und den Laderaum freigibt. Durch die Anbringung an der Hecktüre ergibt sich ein Absatz zwischen der Fahrzeugstruktur und der vorderen Kante der Dach-Luftleitelemente.

Im eingefalteten Zustand verbleibt jedoch im Allgemeinen eine sperrige Anordnung, die nach hinten absteht, z. B. durch die Faltlinien und die mechanischen Elemente der Verstelleinrichtung. Hierdurch wird weiterhin auch ein vollständiges Öffnen der Hecktüre um 270° nach vorne zur Anlage an der Seitenwand behindert.

Die US 2007/0126261 A1 zeigt eine weitere Heckspoilereinrichtung, die an den Seitenwänden des Fahrzeugs angebracht wird und eine Faltung in Fahrzeug-Längsrichtung ermöglicht. Auch diese Heckspoilereinrichtung füllt die gesamte Heckfläche des Fahrzeugs aus.

Die US 4,682,808 B beschreibt eine Heckspoilereinrichtung, die durch mehrere vertikale und horizontale Luftleitelemente ausgebildet wird, die an unterschiedlichen Stellen des Heckbereichs angebracht werden. Als Stand der Technik wird eine Heckspoilereinrichtung mit einem Dach-Luftleitelement gezeigt, das lediglich in einem inneren Bereich vorgesehen ist und an der Dachfläche montiert wird, so dass es sich nach hinten über den Heckbereich erstreckt; die lateral angrenzenden Flächen werden von dem Dach- Luftleitelement nicht erfasst. Derartige Luftleitelemente sind jedoch aufwändig am Dach oder der Fahrzeugstruktur zu montieren und ermöglichen im Allgemeinen kein einfaches Öffnen der Hecktüre.

Die US 7,537,270 B2 zeigt eine Heckspoilereinrichtung mit Dach-Luftleitelement und Seiten-Luftleitelementen, die unterschiedliche Formgebungen aufweisen können und zum Teil zur Montage an der Hecktüre vorgesehen sind.

Eine schwenkbare oder verstellbare Anordnung von Luftleitelementen ist weiterhin auch in z. B. der DE 10 2009 014 860 A1, DE 20 2009 014 476 U1, DE 20 2009 014 510 U1, DE 20 2009 015 009 U1 und DE 102 286 58 A1 gezeigt. Die Anbringung der Luftleitelemente erfolgt hierbei oftmals im Scharnierbereich, so dass spezifische Scharnier-Ausbildungen erforderlich sind. Weiterhin sind die einsetzbaren Luftleitelemente im Allgemeinen in ihrer Länge begrenzt, insbesondere wenn die Hecktüre um 270° nach vorne aufgeschwenkt werden soll. Die Bedienung und Verstellung derartiger Verstellsysteme ist oftmals aufwändig. Die WO2013/063479 zeigt ein Luftleitelement an einer LKW Hecktür, dessen äussere Bereiche dreieckig geformt sind und tiefer liegen als dessen innere Bereiche,- und wobei sich dieser tiefere Bereich von einer vorderen Ecke des Luftleitelements bis zu einer hinteren Kante desselben erstreckt, und welches im eingefahrenen Zustand an der Hecktür anliegt. Der Erfindung liegt die Aufgabe zugrunde, eine Heckspoilereinrichtung zu schaffen, die mit relativ geringem Aufwand ausbildbar ist und eine sichere Anbringung in der Grundstellung ermöglicht. Diese Aufgabe wird durch eine Heckspoilereinrichtung nach Anspruch 1 gelöst. Die Unteransprüche beschreiben bevorzugte Weiterbildungen.

Somit wird das Dach-Luftleitelement in einem lateral bzw. in Querrichtung äußeren Bereich abgesenkt bzw. tiefer ausgebildet als in lateral inneren Bereichen.

Insbesondere liegt ein vorderes Ende bzw. eine vordere Kante des Dach-Luftleitelementes in einer tieferen Position an der Hecktüre als ein lateral bzw. in Querrichtung mittlerer Bereich. Der tiefer liegende äußere Bereich kann sich aber vorzugsweise über die gesamte Länge des Dach- Luftleitelementes erstrecken.

In der ausgefahrenen Fahrstellung fällt das Dach-Luftleitelement somit zu dem seitlich äußeren Bereich hin ab. Diese Formgebung kann insbesondere durch einen schräg abfallenden Übergangsbereich erreicht werden; es kann jedoch z. B. auch der äußere Bereich selbst nach außen abfallen.

Durch diese Ausbildung wird zwar in dem lateralen äußeren Bereich ein gewisser Sprung bzw. ein Absatz zwischen der Fahrzeugstruktur oder der Dachfläche und dem Dach-Luftleitelement erzeugt, der zu einer gewissen Wirbelbildung führen kann; ein derartiger Nachteil wird erfindungsgemäß bewusst in Kauf genommen, da durch die Formgebung deutliche Vorteile in der Gestaltung des Dach-Luftleitelementes erreicht werden, insbesondere auch in der eingefahrenen, d.h. um z. B. 70 bis 90° herab geschwenkten Grundstellung.

Die Grundstellung wird insbesondere durch flaches Anlegen des Dach-Luftleitelementes an der Hecktüre erreicht. Indem der laterale äußere Endbereich in der ausgefahrenen Fahrstellung abgesenkt ist, ergibt sich somit bei flacher Anlage an der Hecktüre eine Profilierung in Fahrzeug-Längsrichtung. Diese Profilierung kann zum einen bewusst gewählt werden, um Strukturen der Hecktüre nachzubilden, sodass in der Grundstellung eine flache Anlage ermöglicht wird. Diese Ausbildung ermöglicht insbesondere eine flache Anlage an Hecktüren, die in ihrem Scharnierbereichen bzw. dem Bereich nahe ihrer Tür-Schwenkachse einen Absatz bzw. Vorsprung nach vorne aufweisen. Derartige Hecktür-Ausbildungen ermöglichen insbesondere auch geeignete Scharnier-ausbildungen, um einen Schwenkvorgang der Türe von der geschlossenen Stellung um 270° nach vorne zu unterstützen. Herkömmliche Heckspoilerausbildungen ermöglichen hierbei keine flache Anlage an derartigen Heckspoilerausbildungen.

Die Ausbildung des Dach-Leitelementes wirkt in besonderer Weise synergistisch mit einer Verstelleinrichtung zusammen, die nicht lediglich ein Klappen des Dach-Luftleitelementes um eine vordere Schwenkachse nach unten vorsieht, sondern einen Schwenkvorgang mit zeitweisem Längsverstellen des Dach-Luftleitelementes vorsieht. Gemäß einer bevorzugten Ausbildung ist hierzu ein Viergelenk-Getriebe vorgesehen, das eine Verstellung von der eingefahrenen Grundstellung durch Ausschwenken nach hinten und nachfolgendem Vorschwenken des vorderen Endes des Dach- Luftleitelementes an das Fahrzeug bewirkt. Somit ermöglicht eine derartige Verstelleinrichtung auch Formgebungen der vorderen Kante bzw. des vorderen Endes des Dach-Luftleitelementes, die bei einer reinen Klappung des Dach- Luftleitelementes um eine feste Schwenkachse nicht möglich sind.

Ein derartiges Viergelenk-Getriebe kann z. B. mit einer großen und einer kleinen Schwinge ausgebildet sein, die vertikal versetzt an der Hecktüre angebracht werden, in ihrer Grundstellung flach an der Hecktüre anliegen und in ihrer Fahrstellung nach hinten ausgefahren sind und somit das Dach-Luftleitelement geeignet abstützen.

Somit wird eine kostengünstige und mit geringen Fahrzeug-Aufwand ausbildbare Heckspoilereinrichtung mit sicherer Verstellung zwischen Grundstellung und ausgefahrener Stellung, insbesondere mit einer Zwangsführung, und geeigneter Formgebung des Dach-Luftleitelementes ermöglicht, um eine flache Anlage auch in der eingefahrenen Grundstellung zu ermöglichen.

Vorteilhaft wird in der Fahrstellung durch entsprechende Maßnahmen sichergestellt, dass zwischen einer Fahrzeugstruktur und/oder Hecktüre und/oder Dachfläche des Fahrzeuges und der vorderen Kante des Dach-Luftleitelementes keine Luftverwirbelungen, die zu einer Erhöhung des Luftwiderstandes des Fahrzeugs führen, auftreten. Dieses kann durch mehrere Maßnahmen erreicht werde. Zum Einen kann das Dach-Luftleitelement derart ausgebildet sein, dass dessen vordere Kante in der Fahrstellung an der Fahrzeugstruktur und/oder Hecktüre und/oder Dachfläche des Fahrzeuges anliegt. Hierdurch wird der Bereich zwischen der vorderen Kante des Dach-Luftleitlements und der Fahrzeugstruktur und/oder Hecktüre und/oder Dachfläche des Fahrzeuges abgedichtet, so dass dort keine oder nur eine sehr reduzierte Lüftströmung möglich ist. Zum Anderen kann ein Dichtmittel zwischen der vorderen Kante des Dach-Luftleitelements und der Fahrzeugstruktur und/oder Hecktüre und/oder Dachfläche des Fahrzeuges vorhanden sein. Hierzu kann z. B. die vordere Kante des Dach-Luftleitelements ein Dichtmittel, wie z. B. eine Dichtlippe, die aus Gummi oder Kunststoff besteht, aufweisen. Durch das Dichtmittel wird eine potentielle Lücke zwischen der vorderen Kante des Dach-Luftleitelements und der Fahrzeugstruktur und/oder Hecktüre und/oder Dachfläche des Fahrzeuges in der Fahrstellung abgedichtet.

Die Erfindung wird im Folgenden anhand der beiliegenden Zeichnungen an einigen Ausführungsformen erläutert. Es zeigen:
Fig. 1 eine perspektivische Ansicht eines Heckbereichs eines LKW mit einer Heckspoilereinrichtung gemäß einer ersten Ausführungsform der Erfindung in Fahrstellung;
Fig. 2 eine entsprechende Darstellung einer Heckspoilereinrichtung gemäß einer zweiten Ausführungsform;
Fig. 3 bis 5 den Vorgang des Ausfahrens der Heckspoilereinrichtung von der Grundstellung der Fig. 3 in die Fahrstellung der Fig. 5;

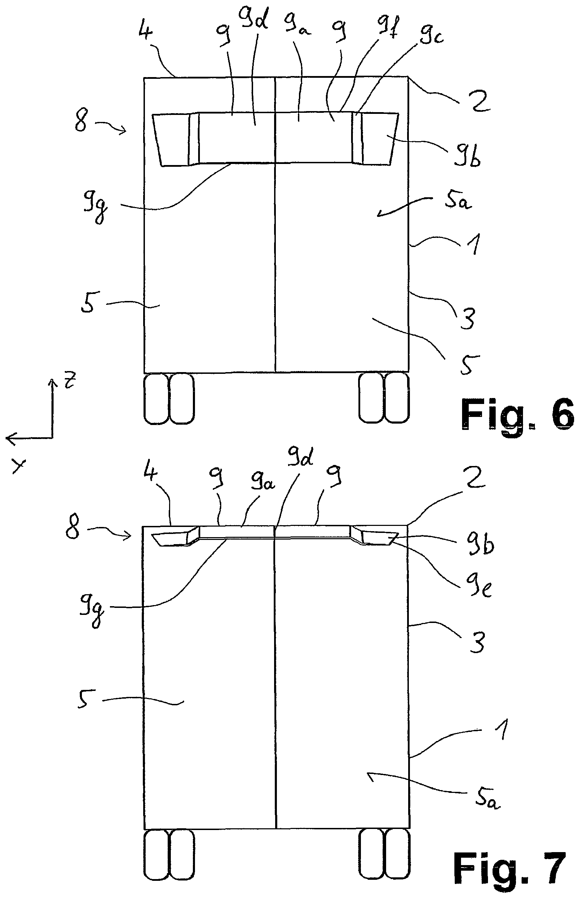

Fig. 6 eine Rückansicht des LKW aus Fig. 1 in Grundstellung;
Fig. 7 eine Rückansicht des LKW aus Fig. 1 in Fahrstellung;
Fig. 8 eine Aufsicht des LKW aus Fig. 1 in Grundstellung;
Fig. 9 eine Aufsicht des LKW aus Fig. 1 in Fahrstellung;
Fig. 10 eine Seitenansicht des LKW aus Fig. 1 in Fahrstellung; und
Fig. 11 eine Seitenansicht des LKW aus Fig. 1 in Fahrstellung.

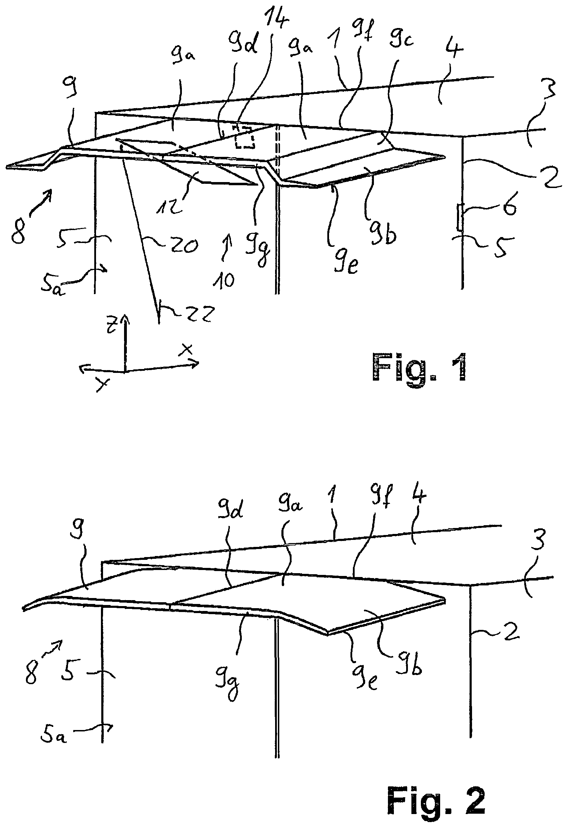

Fig. 1 zeigt ein Fahrzeug 1, insbesondere einen LKW 1, der eine Fahrzeugstruktur 2, zwei Seitenwände 3 (von denen hier die linke Seitenwand 3 dargestellt ist), eine Dachfläche 4 und zwei von innen nach außen aufschwingende Hecktüren 5 aufweist. Die beiden Hecktüren 5 sind somit in ihren seitlich bzw. in Querrichtung y äußeren Bereichen mit Scharnieren 6 an der Fahrzeugstruktur 2 angelenkt und können von der in Fig. 1 und 2 gezeigten geschlossen Position um etwa 270° nach außen aufgeschwenkt werden, um an den Seitenwänden 3 angelegt und arretiert bzw. verriegelt zu werden.

An jeder Hecktüre 5 ist eine Heckspoilereinrichtung 8 angebracht, die jeweils ein Dach-Luftleitelement 9 zur Verlängerung der Kontur der Dachfläche 4 nach hinten, d. h. in -x-Richtung, und eine Verstelleinrichtung 10 zum Verstellen des Dach-Luftleitelementes 9 zwischen der in Fig. 1 gezeigten Fahrstellung und der heruntergeklappten Grundstellung aufweist.

Das z. B. einteilig aus Kunststoff gefertigte Dach-Luftleitelement 9 dient somit zur aerodynamischen Konturverlängerung der Dachfläche 4, insbesondere mit nach hinten und unten abfallender Ausbildung; hierbei kann das Dach-Luftleitelement 9 insbesondere plan sein, es kann jedoch auch z. B. einen gewölbten Verlauf aufweisen.

Das Dach-Luftleitelement 9 weist einen inneren Bereich 9a auf, der direkt an die Dachfläche 4 bzw. die die Dachfläche 4 nach hinten aufnehmende Fahrzeugstruktur 2 angrenzt und anschließend nach hinten abfällt. Weiterhin weist das Dach-Luftleitelement 9 einen lateral bzw. in Querrichtung y äußeren Bereich 9b auf, der in der Fahrstellung tiefer liegt als der innere Bereich 9a, d. h. in vertikaler Richtung nach unten (-z-Richtung) versetzt ist und/oder abfällt.

Somit liegt auch jeweils eine in x-Richtung verlaufende innere Kante 9d höher (in z-Richtung oberhalb) als eine in Querrichtung äußere Kante 9e.

Gemäß der Ausführungsform der Fig. 1 ist zwischen dem inneren Bereich 9a und dem äußeren Bereich 9b ein schräg in Querrichtung nach außen abfallender Übergangsbereich 9c ausgebildet; gemäß der hierzu alternativen Ausführungsform der Fig. 2 schließt der äußere Bereich 9b direkt an den inneren Bereich 9a an und fällt in Querrichtung y schräg nach außen ab.

Der tiefer liegende äußere Bereich 9b kann sich insbesondere über die ganze Längsrichtung, d.h. x-Richtung, erstrecken.

Durch diese Ausbildung des Dach-Luftleitelementes ergibt sich zwar in dem lateral äußeren Bereich 9b ein kleiner Sprung von der Dachfläche 4 bzw. der Fahrzeugstruktur 2 zur Hecktüre 5; es wird jedoch erkannt, dass die so entstehende Abrisskante zwar zu einer geringfügigen Verschlechterung bzw. Erhöhung des Luftwiderstandes führen kann; es zeigt sich jedoch, dass die Beeinträchtigung eher gering ist und ohnehin nahe der Seitenflächen 3 Wirbelbildung auch im Bereich der Oberkante bzw. dem Heckbereich zwischen Dachfläche 4, Seitenwand 3 und Hecktüre 5 auftritt. Insbesondere wird durch die lateral äußere Absenkung des Dach-Luftleitelementes 9 eine flache Anlage in der Grundstellung ermöglicht; somit ist eine hohe Gestaltungsfreiheit der Hecktüren 5 in dem lateral äußeren Bereich ermöglicht. Weitere Vorteile ergeben sich in der eingeklappten Grundstellung, die mit Bezug zu der Verstelleinrichtung 10 nachfolgend erläutert wird.

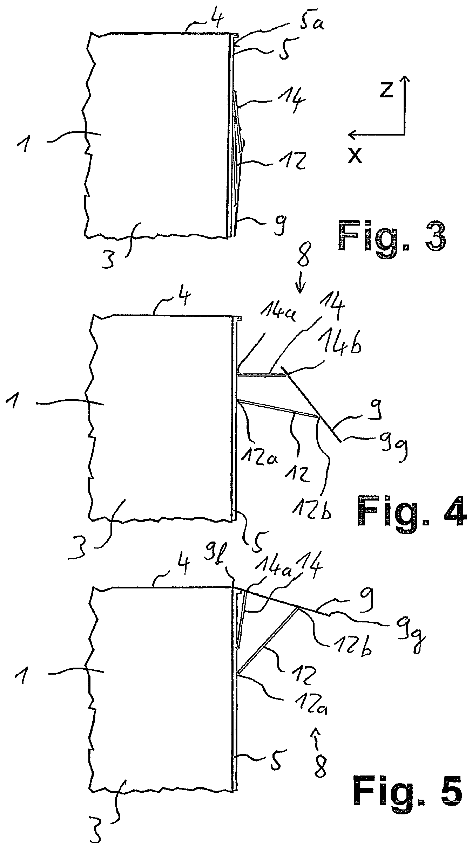

Die Verstelleinrichtung 10 ist gemäß der gezeigten Ausbildung mit einer großen Schwinge 12 und mindestens einer kleinen Schwinge 14 vorgesehen, die jeweils zwischen der Hecktüre 5 und dem Dach-Luftleitelement 9 angelenkt sind. Hierbei ist gemäß Fig. 4 die große Schwinge 12 in einem vorderen Gelenk 12a an der Hecktüre 5 und in einem hinteren Gelenk 12b an dem Dach-Luftleitelement 9 angelenkt; entsprechend ist die kleine Schwinge 14 in einem vorderen Gelenk 14a an der Hecktüre 5 und einem hinteren Gelenk 14b an dem Dach-Luftleitelement 9 angelenkt. Vorteilhafterweise erfolgt die Anbindung der gesamten Heckspoilereinrichtung 8, d. h. des Dach- Luftleitelementes 9 mitsamt Verstelleinrichtung 10, ausschließlich an der Außenfläche 5a der Hecktüre 5, indem an der Außenseite 5a geeignete Anbindungsplatten befestigt sind, in denen die vorderen Gelenke 12a und 14a ausgebildet sind. Somit können grundsätzlich jegliche Fahrzeuge 1 mit entsprechenden Hecktüren 5 mit der Heckspoilereinrichtung 8 versehen werden; eine Anbindung z. B. an einer oberen Kante der Hecktüre 5 ist nicht erforderlich. Weiterhin ist es nicht erforderlich, der Heckspoilereinrichtung 8 an der Fahrzeugstruktur 2, der Dachfläche 4 oder der Seitenwand 3 zu befestigen.

Durch die Viergelenk-Ausbildung mit in vertikaler Richtung z zueinander versetzten vorderen Gelenken 12a und 14a wird gemäß Fig. 3 bis 5 ein Schwenkweg des Dach-Luftleitelementes 9 ermöglicht, bei dem das Dach-Luftleitelement 9 in der Grundstellung der Fig. 3 flach auf die Hecktüre 3 aufgelegt ist, wobei es vorteilhafterweise auf den Schwingen 12 und 14 aufliegt, die ebenfalls flach auf die Hecktüre 5 gelegt sind. Somit ergibt sich in der Grundstellung der Fig. 3 eine flache Ausbildung; die Hecktüre 5 kann somit nach Öffnen um 270° vorgeschwenkt und an der Seitenwand 3 verriegelt werden. Das Aufstellen erfolgt gemäß Fig. 4 und 5 vorteilhafterweise über eine Betätigungsstange 20, die aus Fig. 1 ersichtlich ist und sowohl in ihrer flachen Stellung als auch der ausgefahrenen Fahrstellung der Fig. 1 und 5 in einer Arretierung 22 an der Hecktüre 5 befestigbar ist. Das Dach- Luftleitelement 9 schwenkt somit von der Grundstellung der Fig. 3 aus zunächst sowohl mit seiner vorderen Kante 9f als auch der hinteren Kante 9g nach hinten, d. h. in -x-Richtung und nachfolgend gemäß dem Übergang von Fig. 4 nach Fig. 5 mit seiner vorderen Kante 9f nach vorne bzw. in x-Richtung, sodass die vordere Kante 9f von hinten nach vorne gegen die Fahrzeugstruktur 2 oder die Hecktüre 5 gelangt.

Dieser Schwenkmechanismus erleichtert somit die Verstellung des Dach-Luftleitelementes 9 mit dem abgesenkten äußeren Bereich 9b; anders als bei z. B. reinen Klappvorgängen um eine an der vorderen Kante des Dach-Luftleitelementes vorgesehene feste Schwenkachse ist bei dem Schwenkvorgang der Verstelleinrichtung 10 die genaue Formgebung der vorderen Kante 9f nicht problematisch.

Weiterhin ist eine einfache Verstellung und ein flaches Anlegen in der Grundstellung möglich; es muss lediglich die Betätigungsstange 20 ergriffen und nach oben geführt werden, sodass nachfolgend durch die Viergelenkführung eine Zwangsführung, ohne für die Nutzer störende Freiheitsgrade oder ein "Flattern" des Verstellsystems erfolgt. In der Grundstellung der Fig. 3 kann das Dach-Luftleitelement 9 somit flach an der Hecktüre 5 anliegen; die Formgebung mit der lateralen Absenkung, d. h. dem äußeren Bereich 9b kann hieran eine Formgebung der Hecktüre 5 angepasst werden. Somit ist insbesondere auch eine flache Anlage des Dach-Luftleitelementes 9 an einer Hecktüre 5 möglich, deren Außenseite 5a in ihrem seitlich äußeren Bereich nahe den Scharnieren vertieft ist, d.h. in x-Richtung weiter vorne verläuft.

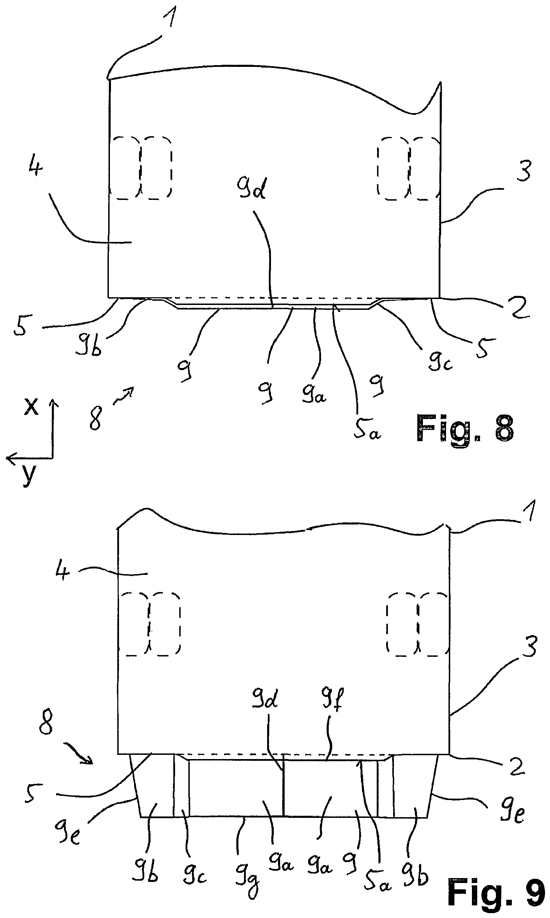

Eine derartige Ausbildung ist insbesondere aus den Aufsichten der Fig. 8 und 9 ersichtlich. Somit kann das Dach-Luftleitelement 9 auch bei einer derartigen Profilierung der Fahrzeugstruktur 7 und der Hecktüre 5 in der Grundstellung der Fig. 8 flach an der Hecktüre 5 anliegen. Durch derartige Ausbildung des Heckbereichs des LKW 1 kann das Scharnier 6 gegenüber der Hecktüre 5 etwas nach vorne versetzt sein, sodass der Schwenkvorgang um 270° zum Öffnen der Hecktüre 5 verbessert wird. Das Dach- Luftleitelement 9 kann einer derartigen Formgebung jeweils angepasst sein.

Die linke und rechte Heckspoilereinrichtung 8 sind jeweils gleich ausgebildet, mit Dach-Luftleitelementen 9, die z. B. zueinander spiegelversetzt ausgebildet sind; die Schwingen 12 und 14 können links und rechts gleich ausgebildet sein.

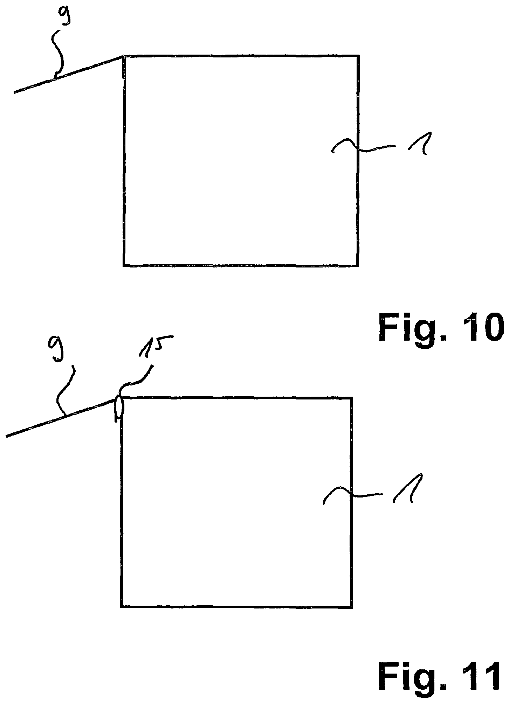

Vorteilhaft wird in der Fahrstellung durch entsprechende Maßnahmen sichergestellt, dass zwischen einer Fahrzeugstruktur und/oder Hecktüre und/oder Dachfläche des Fahrzeuges und der vorderen Kante des Dach-Luftleitelementes keine Luftverwirbelungen, die zu einer Erhöhung des Luftwiderstandes des Fahrzeugs führen, auftreten. Dieses kann durch mehrere Maßnahmen erreicht werde. In Figur 10, die eine Seitenansicht des LKW aus Figur 1 in Fahrstellung zeigt, ist eine Maßnahme dargestellt bei der das Dach-Luftleitelement (9) derart ausgebildet ist, dass dessen vordere Kante (9f) in der Fahrstellung an der Fahrzeugstruktur (2) und/oder Hecktüre (5) und/oder Dachfläche (4) des Fahrzeuges (1) anliegt. Hierdurch wird der Bereich zwischen der vorderen Kante (9f) des Dach-Luftleitlements (9) und der Fahrzeugstruktur (2) und/oder Hecktüre (5) und/oder Dachfläche (4) des Fahrzeuges (1) abgedichtet, so dass dort keine oder nur eine sehr reduzierte Lüftströmung möglich ist. Zum Anderen kann ein Dichtmittel zwischen der vorderen Kante (9f) des Dach-Luftleitelements (9) und der Fahrzeugstruktur (2) und/oder Hecktüre (5) und/oder Dachfläche (4) des Fahrzeuges (1) vorhanden sein. Hierzu kann z. B. die vordere Kante (9f) des Dach-Luftleitelements (9) ein Dichtmittel (15), wie z. B. eine Dichtlippe, die aus Gummi oder Kunststoff besteht, aufweisen. Durch das Dichtmittel (15) wird eine potentielle Lücke zwischen der vorderen Kante (9f) des Dach-Luftleitelements (9) und der Fahrzeugstruktur (2) und/oder Hecktüre (5) und/oder Dachfläche (4) des Fahrzeuges (1) in der Fahrstellung abgedichtet.

## Patentansprüche

1. Heckspoilereinrichtung (8) für ein Fahrzeug (1), wobei die Heckspoilereinrichtung (8) mindestens aufweist:
ein sich in Querrichtung (y) erstreckendes Dach-Luftleitelement (9) zur aerodynamischen Konturverlängerung einer Dachfläche (4) des Fahrzeugs (1) in einer Fahrstellung, und
eine Verstelleinrichtung (10) zum Verstellen des Dach-Luftleitelementes (9) zwischen der Fahrstellung und einer eingefahrenen Grundstellung, wobei
das Dach- Luftleitelement (9) derartig ausgebildet ist, dass in der Fahrstellung ein in Querrichtung (y) äußerer Bereich (9b) des Dach- Luftleitelementes (9) unterhalb eines in Querrichtung inneren Bereichs (9a) des Dach-Luftleitelementes (9) liegt, wobei der der tiefer liegende äußere Bereich (9b) sich über das ganze Dach-Luftleitelement (9) von dessen vorderer Kante (9f) bis zu dessen hinterer Kante (9g) erstreckt, wobei sowohl der innere Bereich (9a) als auch der äußere Bereich (9b) des Dach-Luftleitelement (9) in der Grundstellung flach an einer entsprechend geformten Außenseite (5a) einer Hecktüre (5) des Fahrzeuges (1) anliegen.

2. Heckspoilereinrichtung (8) nach Anspruch 1, **dadurch gekennzeichnet, dass** in der Fahrstellung eine in Längsrichtung (x) verlaufende, das Dach-Luftleitelement (9) nach innen abschließende innere Kante (9d) des Dach-Luftleitelementes (9) höher als eine in Längsrichtung (x) verlaufende, das Dach-Luftleitelement (9) nach außen abschließende äußere Kante (9e) des Dach-Luftleitelementes (9) liegt.

3. Heckspoilereinrichtung (8) nach Anspruch 1 oder 2, **dadurch gekennzeichnet, dass** der tiefer liegende äußere Bereich (9b) sich bis zu einer vorderen Kante (9f) des Dach-Luftleitelementes (9) erstreckt, wobei die vordere Kante (9f) zur Anlage an einer Fahrzeugstruktur (2) und/oder Hecktüre (5) und/oder Dachfläche (4) des Fahrzeuges (1) in der Fahrstellung vorgesehen ist.

4. Heckspoilereinrichtung (8) nach einem der vorherigen Ansprüche, **dadurch gekennzeichnet, dass** das Dach-Luftleitelement (9) einen schräg -abfallenden Übergangsbereich (9c) zwischen dem äußeren Bereich (9b) und dem inneren Bereich (9a) aufweist.

5. Heckspoilereinrichtung (8) nach einem der vorherigen Ansprüche, **dadurch gekennzeichnet, dass** der innere Bereich (9a) und der äußere Bereich (9b) jeweils im wesentlichen parallel und in der Grundstellung vertikal verlaufen.

6. Heckspoilereinrichtung (8) nach einem der vorherigen Ansprüche, **dadurch gekennzeichnet, dass** sie vollständig an einer Hecktüre (5) oder beiden Hecktüren (5) des Fahrzeugs (1) anbringbar ist.

7. Heckspoilereinrichtung (8) nach Anspruch 6, **dadurch gekennzeichnet, dass** sie in ihrer Grundstellung bei vorgeschwenkter, an einer Seitenwand (3) arretierbarer Hecktüre (5) zwischen der Hecktüre (5) und der Seitenwand (3) aufnehmbar ist.

8. Heckspoilereinrichtung (8) nach einem der vorherigen Ansprüche, **dadurch gekennzeichnet, dass** die Verstelleinrichtung (10) als Zwangsführung mit lediglich einem Freiheitsgrad zum Verstellen des Dach-Luftleitelementes (9) zwischen der Grundstellung und der Fahrstellung ausgebildet ist.

9. Heckspoilereinrichtung (8) nach Anspruch 8, **dadurch gekennzeichnet, dass** die Verstelleinrichtung (10) als Viergelenk-Getriebe mit vier Gelenken oder Gelenkachsen (12a, 12b, 14a, 14b), mindestens einer großen Schwinge (12) mit einer größeren Länge (L1, L3) und mindestens einer kleineren Schwinge (14) mit einer kleineren Länge (L2, L4) ausgebildet ist, wobei die große Schwinge (12) und die kleine Schwinge (14) jeweils ein vorderes Gelenk (12a, 14a) zur Anbindung an einer Hecktüre (5) des Fahrzeugs (1) und ein hinteres Gelenk (12b, 14b) zur Anbindung an dem Dach-Luftleitelement (9) aufweisen.

10. Heckspoilereinrichtung (8) nach Anspruch 9, **dadurch gekennzeichnet, dass** das vordere Gelenk (14a) der kleine Schwinge (14) in Querrichtung (y) in vertikaler Richtung höher zur Dachfläche (3) des Fahrzeugs (1) hin an der Hecktüre (5) anbindbar ist als das vordere Gelenk (12a) der großen Schwinge (12).

11. Heckspoilereinrichtung (8) nach Anspruch 9 oder 10, **dadurch gekennzeichnet, dass** das hintere Gelenk (14b) der kleinen Schwinge (14) näher an der Vorderkante (9f) des Dach-Luftleiterelementes (9) angebunden ist als das hintere Gelenk (12b) der großen Schwinge (12).

12. Heckspoilereinrichtung (8) nach einem der Ansprüche 9 bis 11, **dadurch gekennzeichnet, dass** das Dach-Luftleitelement (9) in der Grundstellung flach auf der kleinen Schwinge (14) und der großen Schwinge (12) im wesentlichen parallel zu der Hecktüre (5) aufliegt.

13. Heckspoilereinrichtung (8) nach einem der vorherigen Ansprüche, **gekennzeichnet, durch** ein Dichtmittel (15) zwischen der vorderen Kante (9f) des Dach-Luftleitelements (9) und der Fahrzeugstruktur (2) und/oder Hecktüre (5) und/oder Dachfläche (4) des Fahrzeuges (1).

14. Heckspoilereinrichtung (8) nach Anspruch 13, **dadurch gekennzeichnet, dass** die vordere Kante (9f) des Dach-Luftleitelements (9) das Dichtmittel (15) aufweist.

15. Heckspoilereinrichtung (8) nach Anspruch 13 oder 14, **dadurch gekennzeichnet, dass** das Dichtmittel (15) zumindest teilweise aus einem Gummimaterial oder einem Kunststoff, z. B. einem faserverstärktem Gummi- oder Kunststoffmaterial besteht.

16. Heckspoilereinrichtung (8) nach einem der vorherigen Ansprüche 1 bis 12, **dadurch gekennzeichnet, dass** die vordere Kante des Dach-Luftleitelements (9) in der Fahrstellung an der Fahrzeugstruktur (2) und/oder Hecktüre (5) und/oder Dachfläche (4) des Fahrzeuges (1) anliegt.

## Claims

1. Rear spoiler device (8) for a vehicle (1), wherein the rear spoiler device (8) has at least:
a roof air directing element (9) which extends in a transverse direction (y) for aerodynamically extending the contour of a roof surface (4) of the vehicle (1) in a travel position and
an adjustment device (10) for adjusting the roof air directing element (9) between the travel position and a retracted basic position,
wherein
the roof air directing element (9) is constructed in such a manner that in the travel position a region (9b) of the roof air directing element (9) which is external in a transverse direction (y) is located under a region (9a) of the roof air directing element (9) which is internal in a transverse direction, wherein the lower external region (9b) extends over the entire roof air directing element (9) from the front edge (9f) thereof as far as the rear edge (9g) thereof, wherein both the internal region (9a) and the external region (9b) of the roof air directing element (9) in the basic position abut a correspondingly formed outer side (5a) of a rear door (5) of the vehicle (1) in a planar manner.

2. Rear spoiler device (8) according to Claim 1, **characterized in that** in the travel position an inner edge (9d) of the roof air directing element (9), which inner edge extends in a longitudinal direction (x) and closes the roof air directing element (9) in an inward direction, is higher than an outer edge (9e) of the roof air directing element (9), which outer edge extends in a longitudinal direction (x) and closes the roof air directing element (9) in an outward direction.

3. Rear spoiler device (8) according to Claim 1 or 2, **characterized in that** the lower external region (9b) extends as far as a front edge (9f) of the roof air directing element (9), wherein the front edge (9f) is provided for abutment against a vehicle structure (2) and/or rear door (5) and/or roof surface (4) of the vehicle (1) in the travel position.

4. Rear spoiler device (8) according to one of the preceding claims, **characterized in that** the roof air directing element (9) has an obliquely descending transition region (9c) between the external region (9b) and the internal region (9a).

5. Rear spoiler device (8) according to one of the preceding claims, **characterized in that** the internal region (9a) and the external region (9b) each extend substantially parallel and, in the basic position, vertically.

6. Rear spoiler device (8) according to one of the preceding claims, **characterized in that** it can be fitted completely to a rear door (5) or both rear doors (5) of the vehicle (1).

7. Rear spoiler device (8) according to Claim 6, **characterized in that** it can be received in the basic position thereof between the rear door (5) and the side wall (3) when the rear door (5) is pivoted forward and can be secured to a side wall (3).

8. Rear spoiler device (8) according to one of the preceding claims, **characterized in that** the adjustment device (10) is constructed as a forced guide having only one degree of freedom for adjusting the roof air directing element (9) between the basic position and the travel position.

9. Rear spoiler device (8) according to Claim 8, **characterized in that** the adjustment device (10) is constructed as a four-bar linkage having four links or articulation axes (12a, 12b, 14a, 14b), at least one large rocker arm (12) having a greater length (L1, L3) and at least one smaller rocker arm (14) having a smaller length (L2, L4), wherein the large rocker arm (12) and the small rocker arm (14) each have a front link (12a, 14a) for connection to a rear door (5) of the vehicle (1) and a rear link (12b, 14b) for connection to the roof air directing element (9).

10. Rear spoiler device (8) according to Claim 9, **characterized in that** the front link (14a) of the small rocker arm (14) can be connected to the rear door (5) in a transverse direction (y) at a higher position in a vertical direction in the direction toward the roof surface (3) of the vehicle (1) than the front link (12a) of the large rocker arm (12).

11. Rear spoiler device (8) according to Claim 9 or 10, **characterized in that** the rear link (14b) of the small rocker arm (14) is connected nearer the front edge (9f) of the roof air directing element (9) than the rear link (12b) of the large rocker arm (12).

12. Rear spoiler device (8) according to one of Claims 9 to 11, **characterized in that** the roof air directing element (9) is positioned in the basic position in a planar manner on the small rocker arm (14) and the large rocker arm (12) substantially parallel with the rear door (5).

13. Rear spoiler device (8) according to one of the preceding claims, **characterized by** a sealing means (15) between the front edge (9f) of the roof air directing element (9) and the vehicle structure (2) and/or rear door (5) and/or roof surface (4) of the vehicle (1).

14. Rear spoiler device (8) according to Claim 13, **characterized in that** the front edge (9f) of the roof air directing element (9) has the sealing means (15).

15. Rear spoiler device (8) according to Claim 13 or 14, **characterized in that** the sealing means (15) comprises at least partially a rubber material or a plastics material, for example, a fiber-reinforced rubber or plastics material.

16. Rear spoiler device (8) according to one of the preceding Claims 1 to 12, **characterized in that** the front edge of the roof air directing element (9) abuts in the travel position the vehicle structure (2) and/or rear door (5) and/or roof surface (4) of the vehicle (1).

## Revendications

1. Système de déflecteur arrière (8) pour un véhicule (1), le système de déflecteur arrière (8) présentant au moins :
un élément de guidage d'air de toit (9) s'étendant dans la direction transversale (y) pour le prolongement de contour aérodynamique d'une surface de toit (4) du véhicule (1) dans une position de conduite, et
un système de réglage (10) pour régler l'élément de guidage d'air de toit (9) entre la position de conduite et une position de base rentrée,
l'élément de guidage d'air de toit (9) étant réalisé de telle sorte que dans la position de conduite, une région extérieure (9b) dans la direction transversale (y) de l'élément de guidage d'air de toit (9) soit située en dessous d'une région intérieure (9a) dans la direction transversale de l'élément de guidage d'air de toit (9), la région extérieure (9b) située plus bas s'étendant sur l'élément de guidage d'air de toit (9) depuis son arête avant (9f) jusqu'à son arête arrière (9g), la région intérieure (9a) ainsi que la région extérieure (9b) de l'élément de guidage d'air de toit (9), dans la position de base, s'appliquant à plat contre un côté extérieur de forme correspondante (5a) d'une porte arrière (5) du véhicule (1).

2. Système de déflecteur arrière (8) selon la revendication 1, **caractérisé en ce que** dans la position de conduite, une arête intérieure (9d) de l'élément de guidage d'air de toit (9), terminant l'élément de guidage d'air de toit (9) vers l'intérieur, s'étendant la direction longitudinale (x), est située plus haut qu'une arête extérieure (9e) de l'élément de guidage d'air de toit (9) terminant vers l'extérieur l'élément de guidage d'air de toit (9) et s'étendant dans la direction longitudinale (x).

3. Système de déflecteur arrière (8) selon la revendication 1 ou 2, **caractérisé en ce que** la région extérieure (9b) située plus bas s'étend jusqu'à une arête avant (9f) de l'élément de guidage d'air de toit (9), l'arête avant (9f) étant prévue pour s'appliquer contre une structure de véhicule (2) et/ou une porte arrière (5) et/ou une surface de toit (4) du véhicule (1) dans la position de conduite.

4. Système de déflecteur arrière (8) selon l'une quelconque des revendications précédentes, **caractérisé en ce que** l'élément de guidage d'air de toit (9) présente une région de transition (9c) descendant obliquement entre la région extérieure (9b) et la région intérieure (9a).

5. Système de déflecteur arrière (8) selon l'une quelconque des revendications précédentes, **caractérisé en ce que** la région intérieure (9a) et la région extérieure (9b) s'étendent à chaque fois essentiellement parallèlement et verticalement dans la position de base.

6. Système de déflecteur arrière (8) selon l'une quelconque des revendications précédentes, **caractérisé en ce qu'**il peut être monté complètement sur une porte arrière (5) ou sur les deux portes arrière (5) du véhicule (1).

7. Système de déflecteur arrière (8) selon la revendication 6, **caractérisé en ce qu'**il peut être reçu entre la porte arrière (5) et la paroi latérale (3) dans sa position de base, lorsque la porte arrière (5) pouvant être bloquée contre une paroi latérale (3) est pivotée vers l'avant.

8. Système de déflecteur arrière (8) selon l'une quelconque des revendications précédentes, **caractérisé en ce que** le système de réglage (10) est réalisé sous forme de guidage forcé avec uniquement un degré de liberté pour le réglage de l'élément de guidage d'air de toit (9) entre la position de base et la position de conduite.

9. Système de déflecteur arrière (8) selon la revendication 8, **caractérisé en ce que** le système de réglage (10) est réalisé sous forme de transmission à quadrilatère articulé avec quatre articulations ou axes d'articulation (12a, 12b, 14a, 14b), au moins un grand bras oscillant (12) avec une plus grande longueur (L2, L3) et au moins un plus petit bras oscillant (14) de plus petite longueur (L2, L4), le grand bras oscillant (12) et le petit bras oscillant (14) présentant chacun une articulation avant (12a, 14a) pour la liaison à une porte arrière (5) du véhicule (1) et une articulation arrière (12b, 14b) pour la liaison à l'élément de guidage d'air de toit (9).

10. Système de déflecteur arrière (8) selon la revendication 9, **caractérisé en ce que** l'articulation avant (14a) du petit bras oscillant (14) dans la direction transversale (y) peut être reliée à la porte arrière (5) plus haut dans la direction verticale vers la surface de toit (3) du véhicule (1) que l'articulation avant (12a) du grand bras oscillant (12).

11. Système de déflecteur arrière (8) selon la revendication 9 ou 10, **caractérisé en ce que** l'articulation arrière (14b) du petit bras oscillant (14) est reliée à l'arête avant (9f) de l'élément de guidage d'air de toit (9) plus près que l'articulation arrière (12b) du grand bras oscillant (12).

12. Système de déflecteur arrière (8) selon l'une quelconque des revendications 9 à 11, **caractérisé en ce que** l'élément de guidage d'air de toit (9) s'applique, dans la position de base, à plat sur le petit bras oscillant (14) et sur le grand bras oscillant (12) essentiellement parallèlement à la porte arrière (5).

13. Système de déflecteur arrière (8) selon l'une quelconque des revendications précédentes, **caractérisé par** un moyen d'étanchéité (15) entre l'arête avant (9f) de l'élément de guidage d'air de toit (9) et la structure de véhicule (8) et/ou la porte arrière (5) et/ou la surface de toit (4) du véhicule (1).

14. Système de déflecteur arrière (8) selon la revendication 13, **caractérisé en ce que** l'arête avant (9f) de l'élément de guidage d'air de toit (9) présente le moyen d'étanchéité (15).

15. Système de déflecteur arrière (8) selon la revendication 13 14, **caractérisé en ce que** le moyen d'étanchéité (15) se compose au moins en partie d'un matériau en caoutchouc ou d'un plastique, par exemple d'un matériau en caoutchouc renforcé par des fibres ou d'un matériau en plastique renforcé par des fibres.

16. Système de déflecteur arrière (8) selon l'une quelconque des revendications 1 à 12, **caractérisé en ce que** l'arête avant de l'élément de guidage d'air de toit (9) s'applique dans la position de conduite contre la structure de véhicule (2) et/ou la porte arrière (5) et/ou la surface de toit (4) du véhicule (1).
